(19) Europäisches Patentamt
European Patent Office
Office européen des brevets

(11) **EP 4 147 840 A1**

(12) **EUROPEAN PATENT APPLICATION**
published in accordance with Art. 153(4) EPC

(43) Date of publication:
**15.03.2023 Bulletin 2023/11**

(21) Application number: **21799635.4**

(22) Date of filing: **07.05.2021**

(51) International Patent Classification (IPC):
**B29B 9/12** (2006.01)     **C11D 3/37** (2006.01)

(52) Cooperative Patent Classification (CPC):
**B29B 9/12; C11D 3/37**

(86) International application number:
**PCT/JP2021/017561**

(87) International publication number:
**WO 2021/225168 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.05.2020 JP 2020082600**

(71) Applicant: **Asahi Kasei Kabushiki Kaisha
Tokyo 100-0006 (JP)**

(72) Inventors:
• **MASAKI, Daisuke
Tokyo 100-0006 (JP)**
• **YAMAGUCHI, Takahito
Tokyo 100-0006 (JP)**

(74) Representative: **D Young & Co LLP
120 Holborn
London EC1N 2DY (GB)**

(54) **CLEANING AGENT FOR MOLDING MACHINES**

(57) A purging compound for molding machines includes at least a thermoplastic resin having a long chain branch structure, wherein a branching index at an absolute molecular weight of 1,000,000 is more than 0.30 and less than 1.00.

*FIG. 1*

**Description**

TECHNICAL FIELD

The present disclosure relates to a purging compound for resin molding processing machines.

BACKGROUND

Resin molding processing machines such as an extrusion molding machine and an injection molding machine are generally used for processing such as coloring, mixing, and molding of resins. In processing machines in such types, degraded products (pyrolysis products, burned products, carbides, etc.) generated from a resin or the like may remain in a molding processing machine after a certain operation ends, in addition to additives such as a dye pigment originally contained in a resin or a molding material. If the residue is not removed and remains, the residue would be mixed into a molded article in subsequent molding of the resin, which may cause appearance defects of products. In particular, in cases where a transparent resin is molded, because mixing of carbides and the like is readily recognized visually even in a tiny amount , a molded article would have an appearance defect, resulting in a problem of an increases in the rate of defects of molded articles. Accordingly, techniques for achieving complete removal of residues out of molding machines have been desired.

Conventionally, various methods have been employed for removing residues out of a molding processing machine. Examples include (1) a method of disassembling and cleaning a molding processing machine manually, (2) a method of filling a molding processing machine with a molding material used for the next molding without stopping the molding processing machine, thereby gradually discharging residues, and (3) a method of using a purging compound.

The method (1) has a problem in that the method is inefficient because molding processing machines are required to be stopped, and removal is physically carried out manually, so that molding processing machines tend to be damaged. The method (2) has a problem in that a large amount of a molding material is required for removal of residues, that it takes time to complete the operation, and that a large amount of waste is generated. Accordingly, in recent years, the method (3) by using a purging compound has been preferentially used because it is excellent in the cleaning power to remove residues in molding processing machines.

For the purpose of enhancing the effect of a purging compound, methods for enhancing the cleaning power of a purging compound have been proposed. For example, PTL 1 discloses a method for enhancing the cleaning power by blending a nonionic surfactant into an olefinic resin, and PTL 2 discloses a method for enhancing the cleaning power and the displacement property by blending an anionic surfactant into an olefinic resin. PTL 3 discloses a method for enhancing the cleaning power by blending an acid-modified product (styrene-maleic acid copolymer) into a thermoplastic resin. PTL 4 discloses a method for enhancing the cleaning power by blending a methyl methacrylate-styrene copolymer into a thermoplastic resin. PTL 5 discloses a method for enhancing the cleaning power by blending an inorganic filler into a thermoplastic resin. PTL 6 discloses a method for enhancing the cleaning power by blending an alkali metal salt and/or an alkaline earth metal salt into a hydrocarbon-based resin. PTL 7 discloses a method for enhancing the cleaning power by blending an inorganic filler into a thermoplastic resin. PTL 8 discloses a method for preventing formation of aerosols of small particles of a concentrated sprayable composition containing a surfactant and an anti-mist component. PTL 9 discloses a method for enhancing the cleaning power by blending a surfactant and an inorganic filler into a thermoplastic resin. PTL 10 discloses a method for enhancing the cleaning power and the displacement property by blending an inorganic foaming agent into a thermoplastic resin.

CITATION LIST

PTL1: WO 2018/159752 A1
PTL 2: JP 2007-021765 A
PTL 3: JP H10-120917 A
PTL 4: JP H11-106667 A
PTL 5: JP 2009-134141 A
PTL 6: WO 2015/080103 A
PTL 7: JP 2006-335913 A
PTL 8: JP 2014-530271 A
PTL 9: JP H05-124046 A
PTL 10: JP H10-081898 A

SUMMARY

(Technical Problem)

Through investigations, the present inventors, however, have found that use of the nonionic surfactant disclosed in PTL 1 has a problem that the cleaning performance is insufficient, and thus displacement from the molding material to the purging compound requires a considerable amount of the resin and long time. Further, use of the anionic surfactant disclosed in PTL 2 has a problem in that the cleaning performance is insufficient, and thus displacement to the purging compound requires a considerable amount of the resin and long time. The cleaning performance is also insufficient when the acid-modified product disclosed in PTL 3 or the methyl methacrylate-styrene copolymer disclosed in PTL 4 is blended. Although the effect of improving the cleaning performance by blending of the inorganic filler disclosed in PTL 5 has been confirmed, there is a problem in that displacement from the purging compound to a molding material requires a considerable amount of the resin and long time. Particularly in extrusion molding, the resin flow paths inside a molding machine and a die are quite complex, and the above problem becomes remarkable. The purging compound disclosed in PTL 6 is also suffers from an insufficient cleaning performance. Although the purging compound disclosed in PTL 7 has been confirmed to have an effect of improving the cleaning performance through blending of a surfactant and an inorganic filler, there is a problem in that displacement from the purging compound to a molding material requires a considerable amount of the resin and long time. The purging compound disclosed in PTL 8 relates to a sprayable aqueous composition, and there is a problem in that it is unsuitable for displacement of resins in a resin molding processing machine. Although the purging compound disclosed in PTL 9 has been confirmed to have an effect of improving the cleaning performance through blending of an inorganic salt or a metal hydroxide and an inorganic filler, there is a problem in that displacement from the purging compound to a molding material requires a considerable amount of the resin and long time. The cleaning performance is also insufficient when the inorganic foaming agent disclosed in PTL 10 is blended, and there is a problem in that displacement from the purging compound to a molding material requires a considerable amount of the resin and long time.

Therefore, a purging compound is required to have a high cleaning power against a molding material used in the previous molding, and to have an property to be easily displaced by a molding material used in the subsequent molding.

Accordingly, it would be desirable to provide a purging compound for resin molding processing machines which has an improved balance between the cleaning performance and the property to be easily displaced by a molding material after cleaning.

(Solution to Problem)

As a result of intensive investigation to solve the above problem, the present inventors have paid our attention on the rheological properties of thermoplastic resins so that a purging compound is easily displaced in a molding machine, and have found that a purging compound can be easily displaced without staying in a molding machine even when a flow path inside a mold or a die, such as one for extrusion molding or injection molding, is complex, when a thermoplastic resin having a specific branching index is used, thereby developing the present disclosure.

Specifically, the present disclosure is as follows:

(1) A purging compound for molding machines, comprising a thermoplastic resin having a long chain branch structure, wherein a branching index at an absolute molecular weight of 1,000,000 is more than 0.30 and less than 1.00.

(2) The purging compound for molding machines according to (1), wherein a ratio (extensional viscosity/shear viscosity) of an extensional viscosity at 190 °C at a shear rate of 100 sec$^{-1}$ to a shear viscosity at 190 °C at a shear rate of 100 sec$^{-1}$ is 30 or more.

(3) The purging compound for molding machines according to (1) or (2), wherein the extensional viscosity at 190 °C at a shear rate of 100 sec$^{-1}$ is 42 to 150 kPa·s, and a shear viscosity at 190 °C at a shear rate of 100 sec$^{-1}$ is 500 to 1400 Pa·s.

(4) The purging compound for molding machines according to any one of (1) to (3), wherein the thermoplastic resin having a long chain branch structure is contained in an amount of 5 mass% or more and 70 mass% or less.

(5) The purging compound for molding machines according to any one of (1) to (4), wherein a storage elastic modulus of 190 °C at an angular velocity of 100 rad/sec is 80 kPa or more.

(6) The purging compound for molding machines according to any one of (1) to (5), wherein a content of an additive having a scrubbing effect is 9 mass% or less.

(7) The purging compound for molding machines according to any one of (1) to (6), comprising a thermoplastic resin having a melting point of 130 °C or higher.

(Advantageous Effect)

According to the present disclosure, it is possible to provide a purging compound for resin molding processing machines which has an improved balance between the cleaning performance and the property to be easily displaced by a molding material after cleaning.

BRIEF DESCRIPTION OF THE DRAWINGS

In the accompanying drawings:

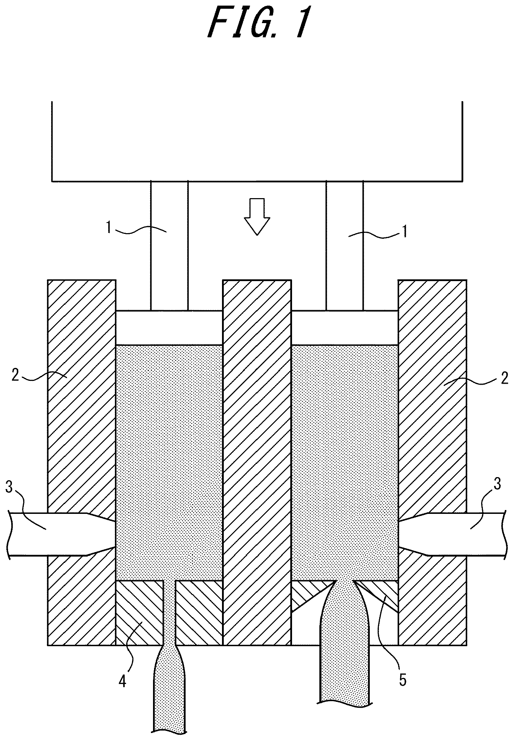

FIG. 1 is a conceptual diagram of a twin capillary rheometer used for measuring the extensional viscosity of purging compounds.

DETAILED DESCRIPTION

The following provides a detailed description of an embodiment of the present disclosure (hereinafter, referred to as the "present embodiment"). Note that the present disclosure is not limited to the following embodiment and may be implemented with various alterations that are within the essential scope thereof.

(Purging compound for molding machines)

A purging compound for molding machines of the present disclosure (in this specification, sometimes simply referred to as "purging compound" or "purging compound for molding machines") contains a thermoplastic resin having a long chain branch structure, wherein a branching index at an absolute molecular weight of 1,000,000 is more than 0.30 and less than 1.00. The purging compound may further contain additives such as a lubricant and a surfactant.

Hereinafter, each component or the like of the purging compound of the present disclosure will be described in detail.

(Thermoplastic resin)

The thermoplastic resin contained in the purging compound for molding machines of the present embodiment includes a thermoplastic resin having a long chain branch structure. The thermoplastic resin may be consisting only of a thermoplastic resin having a long chain branch structure or a mixture of a thermoplastic resin having a long chain branch structure and a thermoplastic resin without a long chain branch structure.

Note that a long chain branch structure refers to a branch having a length that can be comparable to the length of the main chain, whereas a "short chain branch" refers to a branch having a carbon number in the single digits.

In order to achieve high cleaning power and easy displacement property, it is important that a thermoplastic resin having a long chain branch structure is contained in the purging compound for molding machines of the present embodiment, and possession of a long chain branch structure enables easy displacement from a molding material used in the previous molding to the purging compound.

Although the reason why the above-described effect is achieved not completely clarified, it is hypothesized as follows. Specifically, a flow of a conventional purging compound is governed by a shear flow, and a molding material and the purging compound thus tend to stay in dead space or the like inside a die. In contrast, it is hypothesized that the purging compound of the present embodiment can promote displacement of materials by creating a circulating flow such as a vortex by an extensional flow caused by entanglements of the molecular chains. Accordingly, for the purpose of promoting an extensional flow, the purging compound for molding machines of the present embodiment is made to contain a thermoplastic resin which has a long chain branch structure in advance, or made to contain a thermoplastic resin having a long chain branch structure by introducing a long chain branch structure into a thermoplastic resin without a long chain branch structure. Even further, the purging compound preferably contains a thermoplastic resin of which molecular weight is increased or a thermoplastic resin having a crosslinking point or a pseudo crosslinking point, or two or more of such thermoplastic resins may be combined. It is hypothesized that entanglements of molecular chains are increased in such a purging compound composition, which promotes an extensional flow.

The method of introducing a long chain branch structure into the thermoplastic resin is not particularly limited, and conventionally known methods can be used for each thermoplastic resin.

One direct indicator indicating whether a thermoplastic resin has a long chain branch or not is a branching index. For example, as discussed in Developments in Polymer Characterization-4 (J. V. Dawkins ed. Applied Science Publishers, 1983), a polymer molecular chain into which a branched structure has been introduced has a smaller inertia radius than that of a linear polymer molecular chain, and the limiting viscosity is reduced accordingly. Hence, it is known that introduction of a branched structure reduces the branching index represented by the ratio ($[\eta]br/[\eta]lin$) of the limiting viscosity ([η]br) of a branched polymer to the limiting viscosity ([η]lin) of a linear polymer. Accordingly, when the branching index represented by the ratio ([η]br/[η]lin) of the limiting viscosity [η]br of a polymer, to the limiting viscosity [η]lin of a linear polymer with an absolute molecular weight of 1,000,000 is less than 1, it means that that polymer has a branch structure. The phenomenon that the logarithm of [η]lin of a linear polymer has a linear relationship with the logarithm of the molecular weight is known as a Mark-Houwink plot. In addition, if the branching index decreases with an increase in the molecular weight, presence of a long chain branch is suggested.

Examples of the branched structure of the thermoplastic resin include, in addition to a long chain branched polymer, a multi-branched polymer, a comb-shaped polymer, a star-shaped polymer, and a network polymer structure, and a thermoplastic resin including any of these structures may be suitably used in the present embodiment.

Wide variety of thermoplastic resins which are generally used in injection molding, extrusion molding, or the like can be used as the thermoplastic resin to be contained in the purging compound for molding machines of the present embodiment, and one of such thermoplastic resins can be used alone or two or more of these may be used in combination. Preferred thermoplastic resins are, for example, polyolefin-based resins, ethylene-aliphatic unsaturated carboxylic acid copolymer resins such as an ethylene-vinyl acetate copolymer resin and an ethylene-acrylic acid copolymer, ethylene-aliphatic carboxylic acid ester copolymer resins such as an ethylene-acrylic acid ester copolymer, inomer resins, styrene-based resins such as polystyrene, polycarbonate-based resins, polyamide-based resins, polyester-based resins, polyvinyl chloride resins, and the like.

The content of the thermoplastic resin is preferably from 50.0 to 99.9 mass%, more preferably from 60.0 to 99.9 mass%, and even more preferably from 70.0 to 99.9 mass%, with respect to 100 mass% of the purging compound composition, from the viewpoint of the cleaning power and the easy displacement property.

The above-described polyolefin-based resin is preferably a polyethylene-based resin, a polypropylene-based resin, or a polybutene-based resin. Here, a polyethylene-based resin refers to a homopolymer of ethylene or a copolymer of ethylene and one or more other monomers having an ethylene content of 50 mass% or more. Further, a polypropylene-based resin refers to a homopolymer of propylene or a copolymer of propylene and one or more other monomers having a propylene content of 50 mass% or more. Furthermore, a polybutene-based resin refers to a homopolymer of butene or a copolymer of butene and one or more other monomers having a butene content of 50 mass% or more.

Examples of the above-described polyethylene-based resin include polyethylene, and an ethylene-α-olefin copolymer, specifically high-density polyethylene (HDPE), low-density polyethylene (LDPE), linear low-density polyethylene (LLDPE), linear ultra-low-density polyethylene (VLDPE, ULDPE), and ultra-high molecular weight polyethylene (UHMWPE).

The above-described ethylene-α-olefin copolymers is preferably a copolymer composed of ethylene and at least one selected from α-olefins having a carbon number of 3 to 20, and more preferably a copolymer composed of ethylene and at least one selected from α-olefins having a carbon number of 3 to 12. Examples of the α-olefin include propylene, 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, and 1-eicosane, and one of these may be used alone or two or more of these may be used in combination.

As the ethylene-α-olefin copolymer, a copolymer of ethylene and at least one comonomer selected from a propylene comonomer, a butene comonomer, a hexene comonomer, and an octene comonomer is generally easily available and can be suitably used.

The above-described polyethylene-based resin can be polymerized using a well-known catalyst such as a chromium-based catalyst, a Ziegler-based catalyst, or a metallocene-based catalyst. From the viewpoint of the cleaning performance, a chromium-based catalyst having a wide molecular weight distribution or a Ziegler-based catalyst is preferred, and a chromium-based catalyst having a long chain branch of a molecular chain with a carbon number of 6 or more or a metallocene catalyst is more preferred.

One of the above-described polyethylene-based resins may be used alone or two or more of these may be used in a combination. From the viewpoint of the cleaning performance, a polyethylene-based resin having a long chain branch structure is more preferred.

Further, the above-described polyethylene-based resin preferably has an MFR (at 190 °C, under a load of 2.16 kg) of 0.01 to 30 g/10 min, more preferably 0.05 to 25 g/10 min, and even more preferably 0.1 to 20 g/10 min from the viewpoint of the cleaning performance.

Examples of the above-described polypropylene-based resin include polypropylene, a propylene-α-olefin copolymer, and a ternary copolymer of propylene, ethylene, and an α-olefin.

A propylene-α-olefin copolymer described above refers to a copolymer composed of propylene and at least one selected from α-olefins. The above-described propylene-α-olefin copolymer is preferably a copolymer composed of propylene and at least one selected from ethylene and an α-olefin having a carbon number of 4 to 20, and more preferably a copolymer composed of propylene and at least one selected from ethylene and an α-olefin having a carbon number of 4 to 8. Examples of the α-olefin having a carbon number of 4 to 20 include 1-butene, 1-pentene, 1-hexene, 1-octene, 4-methyl-1-pentene, 3-methyl-1-pentene, 1-decene, 1-dodecene, 1-tetradecene, 1-hexadecene, 1-octadecene, and 1-eicosane, and one of these may be used alone or two or more of these may be used in combination. These copolymers may be in a form of either a block copolymer or a random copolymer, and are preferably random copolymers of propylene and ethylene. As the above-described propylene-$\alpha$-olefin copolymer, a copolymer of propylene and at least one comonomer selected from an ethylene comonomer, a butene comonomer, a hexene comonomer, and an octene comonomer is generally easily available and can be suitably used.

As the above-described ternary copolymer of propylene, ethylene, and an $\alpha$-olefin, a ternary copolymer of propylene, ethylene, and an $\alpha$-olefin such as butene, hexene, and octene can be suitably used. These ternary copolymers may be in a form of either a block copolymer or a random copolymer, and are preferably random copolymers of propylene, ethylene, and butene.

The above-described polypropylene-based resin may be not only a resin polymerized with a catalyst such as a Ziegler-Natta catalyst but also a resin polymerized with a well-known catalyst such as a metallocene-based catalyst, and syndiotactic polypropylene, isotactic polypropylene, or the like may be used, for example.

In addition, the above-described polypropylene-based resin preferably has a long chain branch from the viewpoint of the cleaning performance, and a branch can be introduced by grafting or polymerization by ionizing radiation, for example.

The above-described polypropylene-based resin preferably has an MFR (at 230 °C, under a load of 2.16 kg) of 0.01 to 30.0 g/10 min, more preferably 0.05 to 25 g/10 min, and even more preferably 0.1 to 20 g/10 min from the viewpoint of the cleaning performance.

Because the above-described polybutene-based resin is particularly excellent in compatibility with a polypropylene-based resin, the polybutene-based resin is preferably used in combination with the above-described polypropylene-based resins for the purpose of adjusting the melt viscosity.

As the above-described polybutene-based resin, a copolymer which is crystalline and is composed of butene and at least one selected from ethylene, propylene, and an olefin-based compound having a carbon number of 5 to 8 can be suitably used.

An ethylene-vinyl acetate copolymer resin described above refers to a copolymer obtained through copolymerization of an ethylene monomer and a vinyl acetate monomer. An ethylene-aliphatic unsaturated carboxylic acid copolymer resin refers to a copolymer obtained through copolymerization of an ethylene monomer and at least one monomer selected from aliphatic unsaturated carboxylic acids. Examples of the aliphatic unsaturated carboxylic acids include acrylic acid, methacrylic acid, fumaric acid, and maleic acid.

Further, an ethylene-aliphatic unsaturated carboxylic acid ester copolymer resin refers to a copolymer obtained through copolymerization of an ethylene monomer and at least one monomer selected from aliphatic unsaturated carboxylic acid esters. Examples of the aliphatic unsaturated carboxylic acid esters include, for example, acrylic acid ester, methacrylic acid ester, fumaric acid ester, and maleic acid ester.

Copolymerization of the copolymer resin can be performed by a known method such as a high pressure method or a melt method, and a multi-site catalyst, a single-site catalyst, or the like can be used as a catalyst for a polymerization reaction. In addition, in the above-described copolymer, the bond shape of each monomer is not particularly limited, and a polymer having a bond shape such as a random bond or a block bond can be used.

An ionomer resin described above is a resin having an ionic bond between polymer structures, and a resin in which an alkali metal or an alkaline earth metal is bonded to copolymers of ethylene and acrylic acid or methacrylic acid to form a crosslinked structure can be preferably used.

A styrene-based resin described above refers to polystyrene or a copolymer of styrene and one or more other monomers having a styrene content of 50 mass% or more.

Examples of other monomers copolymerized with styrene include acrylonitrile and butadiene, for example.

Specific examples of the styrene-based resin include polystyrene, a styrene-acrylonitrile copolymer, and a styrene-butadiene-acrylonitrile copolymer.

The above-described styrene-based resin preferably has a long chain branch from the viewpoint of the cleaning performance, and for example, a resin having a branch can also be used.

A polycarbonate-based resin described above is a copolymer having a carbonic acid ester bond in a repeating unit of the main chain, and examples thereof include copolymers obtained by a method of reacting an aromatic dihydroxy compound with a carbonate precursor; an interfacial polymerization method (e.g., phosgene method) of reacting an aromatic dihydroxy compound with a carbonate precursor (e.g., phosgene) in the presence of a water solution of sodium hydroxide and a methylene chloride solvent; an transesterification method (e.g., melt method) of reacting an aromatic dihydroxy compound with a diester carbonate (e.g., diphenyl carbonate); a method of carrying out solid-phase polymerization of a crystallized carbonate prepolymer obtained by a phosgene method or a melt method, and the like.

The above-described polycarbonate-based resin preferably has a long chain branch from the viewpoint of the cleaning performance, and for example, a resin into which a branch is introduced by grafting or polymerization by ionizing radiation can also be used.

A polyamide-based resin described above is an aliphatic polyamide-based copolymer or an aromatic polyamide-based copolymer having an amide bond in a repeating unit of the main chain, and nylon 6, nylon 6/66, metaxylylene adipamide (MYD6Ny), and the like can be suitably used.

A polyester-based resin described above is a copolymer having an ester bond in a repeating unit of the main chain, and polyethylene terephthalate obtained through polycondensation of terephthalic acid and ethylene glycol or the like can be suitably used.

The purging compound of the present embodiment may include an additive.

The content of the additive is preferably 10 mass% or less with respect to 100 mass% of the purging compound composition.

Additives will be described below.

(Lubricant)

Examples of a lubricant include organic acids and organic acid derivatives such as an organic acid metal salt, an organic acid amide, and an organic acid ester, various ester waxes, olefin waxes, fluororesins, and mineral oils, but are not particularly limited thereto.

From the viewpoint of the cleaning performance, the lubricant preferably has a surface tension of 32 mN/m or less, and more preferably has a melting point or a softening temperature of 70 °C or higher. For example, the surface tension of zinc stearate is 24 mN/m, the surface tension of aluminum stearate is 25 mN/m, the surface tension of polyolefin wax is 32 mN/m, and so forth.

The above-described organic acid is preferably a saturated fatty acid having a carbon number of 9 to 28, an unsaturated fatty acid having a carbon number of 9 to 28, or a benzoic acid. The chain may have a hydroxyl group in a part thereof. In particular, stearic acid, 12-hydroxystearic acid, palmitic acid, myristic acid, and lauric acid are more preferred from the viewpoint of the availability and the heat resistance. The organic acid may also be a mixture of fatty acids having different alkyl chains. A carbon number within the above range is preferred because of lack of problem of gas generation or odor and availability, and well functioning of properties as a lubricant at the interface.

The above-described organic acid may be a metal salt. The metal salt in the metal organic acid salt is not particularly limited, and examples thereof include sodium, potassium, lithium, cesium, magnesium, calcium, aluminum, zinc, iron, cobalt, and barium salts. Among them, a metal salt of lithium, calcium, barium, zinc, or aluminum, which can impart highest effect as a lubricant is preferred. Among them, metal salts of aluminum or zinc are more preferred because they have a low polarity and can easily exhibit external lubricity by means of bleed-out from a thermoplastic resin. Zinc metal salts are particularly preferred.

Similarly to the chain length of the fatty acid described above, the hydrocarbon moiety is preferably stearic acid or 12-hydroxystearic acid, palmitic acid, myristic acid, or lauric acid from the viewpoint of the availability and the heat resistance.

Examples of the above-described organic acid amide include saturated fatty acid amides, unsaturated fatty acid amides, saturated fatty acid bisamides, and unsaturated fatty acid bisamides having a carbon number of 9 to 28. Among them, fatty acids having a carbon number of 12 to 18 such as lauric acid, myristic acid, palmitic acid, and stearic acid, amides of unsaturated fatty acids such as erucic acid, and saturated fatty acid bisamides such as ethylene stearic acid bisamide are preferred from the viewpoint of the availability and the effect as a lubricant, and saturated fatty acid bisamides such as ethylene stearic acid bisamide are more preferred.

Examples of the above-described organic acid ester and ester wax include saturated fatty acid esters having a carbon number of 9 to 28, unsaturated fatty acid esters, medium-chain fatty acid triglycerides, and polyol esters such as hydrogenated oils. Stearic acid stearate, glycerol fatty acid ester monoglyceride, and the like are preferable from the viewpoint of the availability and the effect as a lubricant.

Examples of the above-described olefin wax include low molecular weight polyolefins and the like, and although there is no particular limitation on the type thereof, generally-used low-density or high-density polyethylene, polypropylene, and the like are used. An olefin wax having a molecular weight of about 1,000 to 50,000 in weight average molecular weight, and a drop point of 80 to 180 °C is the most effective as a lubricant.

Note that the above-described thermoplastic resin does not include olefin waxes as the lubricant described above.

Examples of the above-described fluororesin include PTFE, PFA, PVDF, PVDF-based copolymers, ETFE, and PFE, which are expected to suppress the adhesiveness of the resin to a metal surface. The fluororesin may take various shapes such as a pellet shape and a powder shape, and a fluororesin in a powder shape is particularly preferable for achieving uniform dispersion during processing. The average particle size is not significantly limited, but is preferably 1,000 $\mu$m or less.

Note that the above-described thermoplastic resin does not include fluororesins as the lubricant described above.

A mineral oil described above is an oil obtained through refining of petroleum, and is a saturated hydrocarbon-based oil including naphthene, isoparaffin, and the like, also called mineral oil, lubricating oil, liquid paraffin, and the like. Mineral oils having a wide viscosity range can be used, for example, liquid paraffin having a kinematic viscosity measured according to JIS K2283 of 50 to 500 mm$^2$/s, or liquid paraffin having a viscosity measured by the Redwood method (Japanese Oil Chemicals Association Standard Oil Analytical Test Method 2.2.10.4-1996) of 30 to 2000 seconds may be used.

One of the above-mentioned lubricants may be used alone or two or more of these may be used in combination.

(Surfactant)

Examples of the above-described surfactant include anionic surfactants, cationic surfactants, nonionic surfactants, and amphoteric surfactants. Specifically, examples of the anionic surfactants include higher fatty acid alkali salts, alkyl sulfuric acid salts, alkyl sulfonic acid salts, alkyl aryl sulfonic acid salts, and sulfosuccinic acid ester salts. Specific examples of the cationic surfactants include higher amine halogen acid salts, alkylpyridinium halides, and quaternary ammonium salts. Specific examples of the nonionic surfactants include polyethylene glycol alkyl ether, polyethylene glycol fatty acid esters, sorbitan fatty acid esters, and fatty acid monoglycerides Specific examples of the amphoteric surfactants include amino acids and the like.

One of the above-mentioned surfactants may be used alone, or two or more of these may be used in combination.

In the purging compound of the present embodiment, the content of an additive having a scrubbing effect such as an inorganic filler, an inorganic foaming agent, and an ultra-high molecular weight resin is preferably 9 mass% or less, more preferably 7 mass% or less, and even more preferably 5 mass% or less, for providing easy displacement property.

Although the effect of an additive having a scrubbing effect on the displacement property is not completely clarified, it is hypothesized as follows. Specifically, it is hypothesized that an inorganic filler, an inorganic foaming agent, and an ultra-high molecular weight resin improve the cleaning power by their scraping effect against contaminants. However, when a flow path inside a mold or a die, such as one for extrusion molding or injection molding, is complex, they are difficult to be discharged because they tend to stay in a molding machine, so that the displacement property is hindered.

(Additive having scrubbing effect)

(Inorganic filler)

In the present embodiment, an inorganic filler is an inorganic compound other than an inorganic foaming agent, and refers to both a natural product and an artificial synthetic product. Specific examples of such an inorganic compound include talc, mica, wollastonite, zonotraite, kaolin clay, montmorillonite, bentonite, sepiolite, imogolite, sericite, lawsonite, smectite, calcium sulfate fibers, calcium carbonate, magnesium carbonate, titanium oxide, aluminum hydroxide, magnesium hydroxide, zeolite, diatomaceous earth, glass powder, glass ball, glass fiber, and shirasu balloon.

(Inorganic foaming agent)

In the present embodiment, an inorganic foaming agent refers to an inorganic compound that decomposes to foam, i.e., generate a gas, when being heated. Examples include inorganic physical foaming agents such as water; and well-known inorganic chemical foaming agents including bicarbonates such as sodium bicarbonate (hereinafter also referred to as "baking soda") and ammonium bicarbonate, carbonates such as sodium carbonate and ammonium carbonate, nitrites such as ammonium nitrite, hydrides such as sodium borohydride, azide compounds such as calcium azide, light metals such as magnesium and aluminum, combinations of sodium bicarbonate and an acid, combinations of hydrogen peroxide and yeast bacteria, combinations of aluminum powder and an acid.

(Ultra-high molecular weight resin)

In the present embodiment, an ultra-high molecular weight resin is a polymer having a molecular weight of 1,000,000 or more, and examples thereof include an ethylene-based ultra-polymer, a styrene-acrylonitrile-based ultra-polymer, and a methyl methacrylate-based ultra-polymer, among which an ethylene-based ultra-polymer is preferable. The upper limit of the molecular weight is not particularly limited, but generally is preferably 10,000,000 or less in practical use.

Further, the ultra-high molecular weight resin may be either a homopolymer or a copolymer. In the case of a copolymer, the content of the main component (for example, ethylene, a styrene-acrylonitrile copolymer, a methyl methacrylate, and the like) is required to be 50 mass% or more.

The above-described ultra-high molecular weight resin preferably has a long chain branch from the viewpoint of the cleaning performance, and a resin having a branch can also be used, for example.

The content of the ultra-high molecular weight resin is preferably 0.1 mass% or more and 9 mass% or less, more preferably 0.2 mass% or more and 7 mass% or less, and even more preferably 0.3 mass% or more and 5 mass% or less, with respect to 100 mass% of the purging compound composition, from the viewpoint of the cleaning power and the easy displacement property. Such a purging compound composition can have both cleaning power and easy displacement property.

Although the reason why the above-described effect is achieved not completely clarified, it is hypothesized as follows. Specifically, while inclusion of the ultra-high molecular weight resin improves the cleaning power by means of the scraping effect against contaminants, it is hypothesized that easy displacement property is inhibited because the shear viscosity is excessively increased with an increase in the content of the ultra-high molecular weight resin.

The above-described thermoplastic resin does not include an ultra-high molecular weight resin as the additive having the scrubbing effect described above.

The purging compound for molding machines of the present embodiment has a branching index of more than 0.30 and less than 1.00, preferably more than 0.35 and less than 0.97, more preferably more than 0.40 and less than 0.95, when the absolute molecular weight determined by light scattering is 1,000,000. When the branching index at an absolute molecular weight of 1,000,000 is within any of the above ranges, an extensional flow is promoted and high cleaning power and easy displacement property can be achieved. If the branching index is less than 0.3, gelation may occur or an extensional flow may be suppressed because the proportion of side chains becomes extremely high. A branching index of 1.00 or more means absence of branches, and no cleaning effect is expected because a shear flow becomes the primary flow.

A method of setting the branching index to be more than 0.30 and less than 1.00 includes promoting entanglements of molecular chains, such as by introducing a large number of long chain branches.

The branching index at an absolute molecular weight of 1,000,000 can be calculated from the absolute molecular weight and the limiting viscosity measured by gel permeation chromatography (GPC) (for example, a high temperature gel permeation chromatograph model PL-GPC220 manufactured by Polymer Laboratories Ltd.), and specifically can be obtained by the methods described in the Examples section to be described later.

In this embodiment, the cleaning performance of the purging compound depends on the extensional viscosity and the shear viscosity measured by a twin capillary rheometer (e.g., RH10 manufactured by Malvern Panalytical) and the storage elastic modulus measured by a rheometer (e.g., ARES-G2 manufactured by TA Instruments). Accordingly, both the viscosity and the elasticity at the temperature range, the shear rate, and the angular velocity during molding processing need to be adjusted.

In addition, in the present embodiment, in order to achieve high cleaning power and easy displacement property, viscoelasticity when being molten is important. In particular, in cleaning of a molding machine, when the extensional viscosity of the purging compound composition as a whole is high, an extensional flow is promoted, and a material used in the previous molding can be easily displaced by the purging compound.

The viscosity is evaluated based on the shear viscosity and the elasticity is evaluated based on the extensional viscosity, among viscoelasticity data obtained by a measurement by a twin capillary rheometer. The shear rate of the purging compound of the present embodiment ranges from the order of several tens to several hundreds $sec^{-1}$, and in particular, the shear rate that is highly correlated with the cleaning performance for extrusion processing is 100 $sec^{-1}$.

In order to achieve a high cleaning power against a material used in the previous molding during cleaning of a molding machine, it is preferred that the purging compound composition as a whole has a high extensional viscosity. Specifically, the extensional viscosity of the purging compound composition at 190 °C and a shear rate of 100 $sec^{-1}$ is preferably 42 to 150 kPa·s, more preferably 50 to 140 kPa·s, and even more preferably 55 to 130 kPas·s.

Examples of the technique to set the extensional viscosity of the purging compound composition within any of the above ranges include introduction of a long chain branch structure into the thermoplastic resin, and selection and adjustment of the molecular weight, the degree of branching, or the molecular weight distribution of the thermoplastic resin, or presence or absence of an added ultra-high molecular weight resin in the thermoplastic resin. In particular, a thermoplastic resin having a long chain branch structure is preferably contained in an amount of 5 mass% or more and 70 mass% or less, more preferably in an amount of 10 mass% or more and 60 mass% or less, and even more preferably in an amount of 15 mass% or more and 50 mass% or less. Such a purging compound composition can have an extensional viscosity as described above and can promote displacement from a material used in the previous molding to the purging compound.

Although the reason why the above-described effect is achieved is not completely clarified, it is hypothesized that displacement of materials can be promoted by creating a circulating flow such as a vortex by an extensional flow caused by the extensional viscosity. If the content of the resin having a long chain branch structure is less than 5 mass%, it is difficult to sufficiently improve the extensional viscosity. Or, if the content is 75 mass% or more, the storage elastic modulus of the purging compound composition as a whole tends to decrease. In either case, sufficient cleaning performance tends not to be achieved.

Here, a measurement of the extensional viscosity by a twin capillary rheometer according to the present embodiment will be described. FIG. 1 illustrates a conceptual diagram of a device of a twin capillary rheometer. The twin capillary rheometer, as its name suggests, includes two barrels 2 and two pistons 1, and has dices (long dice 4 and short dice 5) having different ratios of L (length) / d (diameter) attached on the left and right sides, respectively. Pressure gauges 3 on the sides of the barrels in the immediate vicinity of the respective dices measure changes in the pressures with a change in the shear rate, thereby determining the extensional viscosity from the following Cogswell theoretical equation (Polymer Engineering Science, 12, 64 (1972)).

Extensional viscosity

$$\lambda \ [\text{kPa} \cdot \text{s}] = 9(n+1)^2 \text{Po}^2 \ / \ (32\eta\gamma^2)$$

Shear viscosity

$$\eta \ [\text{kPa} \cdot \text{s}] = \text{Tc}/\gamma$$

Apparent shear rate

$$\gamma \ [\text{s}^{-1}] = 4Q \ / \ ((\pi d^3)/8)$$

Corrected shear stress

$$\text{Tc} \ [\text{kPa}] = (\text{Pl} - \text{Po})d \ / \ 4L$$

(In the equation, Q represents the volumetric flow rate, d represents the capillary diameter of the die (mm), Pl represents the pressure loss on the side of the long dice, Ps represents the pressure loss on side of the short dice, Po represents zero thickness-converted pressure on the side of short dice, or the pressure when L/d = 0 obtained by extrapolation from the value of Pl - Ps, and n represents the power low index (n = 1, 2, 3, 4 ...)).

It is assumed that only the Bagley correction is used and the Rabinowitsch correction is not used for correction of data.

Specifically, the above-described extensional viscosity of the purging compound composition can be measured by the method described in the Examples section to be described later.

For further improvement of the cleaning power, the storage elastic modulus of the purging compound composition at a temperature of 190 °C and an angular velocity of 100 rad/sec is preferably 80 to 250 kPa, more preferably 90 to 240 kPa, and even more preferably 100 to 230 kPa. Such a purging compound composition can have a high cleaning performance.

Although the reason why the above-described effect is achieved is not completely clarified, it has been discovered that a material used in the previous molding is easily discharged by a purging compound composition having a high storage elastic modulus, which is considered to be influenced by the hardness of the purging compound when being molten, and in particular, the storage elastic modulus at an angular velocity of 100 rad/sec has a good correlation with the cleaning performance.

In particular, inclusion of a crystalline resin having a melting point of 130 °C or higher is preferable from the viewpoint of improving the cleaning performance, inclusion of a high-density polyethylene is more preferable, and inclusion of a linear high-density polyethylene polymerized by using a Ziegler-based catalyst is even more preferable.

Although the reason why the above-described effect is achieved is not completely clarified, it is hypothesized that the improvement in an storage elastic modulus of the purging compound composition affects the cleaning performance.

Specifically, the above-described storage elastic modulus of the purging compound composition can be measured by the method described in the Examples section to be described later.

Purging compounds are also required to have easy displacement property to promote displacement from the purging compound to a molding material used for subsequent molding. Accordingly, for improving the easy displacement property, the shear viscosity of the purging compound composition at 190 °C and a shear rate of 100 sec$^{-1}$ is preferably

500 to 1400 Pa·s, more preferably 550 to 1350 Pa·s, and even more preferably 600 to 1300 Pa s. A purging compound composition having such a shear viscosity has a high easy displacement property and can promote displacement from the purging compound to the subsequent molding material. For reducing the shear viscosity, it is preferable to include a thermoplastic resin having a low molecular weight or a wide molecular weight distribution, which may be achieved by combining two or more thermoplastic resins. Such a purging compound composition is considered to be easily displaced by the subsequent molding material because of its high fluidity.

The shear viscosity at a shear rate of 100 sec$^{-1}$ and a temperature of 190 °C can be measured by the method described in the Examples section to be described later.

On the other hand, there is basically a trade-off between the cleaning power and the easy displacement property. In order to achieve a high performance as well, the ratio of the extensional viscosity to the shear viscosity (extensional viscosity (Pa·s) / shear viscosity (Pa·s)) is preferably 30 or more, the ratio of extensional viscosity / shear viscosity is more preferably 35 or more, and the ratio of extensional viscosity / shear viscosity is more preferably 40 or more at a temperature of 190 °C and a shear rate of 100 sec$^{-1}$. Such a purging compound composition has a high cleaning performance and can promote displacement from the purging compound to a molding material for the subsequent molding.

Although the reason why the above-described effect is achieved is not completely clarified, it is hypothesized that discharge of the previous molding material caused by an extensional flow and discharge of the purging compound per se due to the low shear viscosity can be achieved at the same time. In order to achieve this, it is preferable to reduce the molecular weight of the thermoplastic resin while promoting entanglements of molecular chains such as by introducing a long chain branch structure into the thermoplastic resin.

The purging compound composition of the present embodiment is suitable for use in cleaning applications for injection molding or extrusion molding in which a flow path is complex, and is particularly suitable for cleaning after processing of a molded article containing polyolefin.

(Method of producing purging compound)

Although the method of producing the purging compound composition of the present embodiment is not particularly limited, the purging compound composition can be produced by, for example, a method in which the above-mentioned components are premixed in a mixer, and then kneaded and extruded in an extruder, followed by pelletization, or the like.

(Shape of purging compound)

The shape of the purging compound of the present embodiment is not particularly limited as long as the effects of the present disclosure are not inhibited, and examples of the shape include cylindrical, spherical, flake-like, and powdery shapes, for example.

(Method of cleaning resin molding processing machine)

A cleaning method of a resin molding processing machine according to the present embodiment uses the above-described purging compound composition.

Further, the cleaning method of a resin molding processing machine according to the present embodiment may include a step of causing the above-described purging compound composition to stay in the resin molding processing machine.

Specific examples of the resin molding processing machine include an injection molding machine and an extrusion molding machine.

The cleaning method of a resin molding processing machine according to the present embodiment can promote efficient discharge of a molded-processed material before cleaning. In addition, the cleaning method causes the purging compound composition to remain filled in the resin molding processing machine in cases where the resin molding processing machine is suspended after cleaning. This is advantageous in that, even if the molded-processed material before the cleaning remains in the resin molding processing machine due to insufficient cleaning, thermal degradation of the remaining material is prevented.

If a purging compound having a weak cleaning power is used, the previous molding material would remain in a resin molding processing machine and would be mixed into a subsequent molding material as a foreign matter. In addition, there tends to be a problem in that any remaining molding material after the molding processing machine is suspended degrades, and the degraded material is mixed after the molding processing machine is started again. For the purpose of avoiding this problem, as a method of increasing the cleaning power of the purging compound, an inorganic filler or an inorganic foaming agent for increasing the cleaning power is typically blended into a thermoplastic resin that serves as the base material, for example. However, these cleaning components have a low displacement property.

Thus, when such a purging compound is used for cleaning inside a resin molding processing machine, there is a problem in that it takes a long time until the purging compound is displaced by a molding material used the subsequent molding, that loss of the molding material is increased, and that the efficiency of the production is likely to be reduced.

EXAMPLES

Hereinafter, the present disclosure will be described in more detail with reference to Examples and Comparative Examples. The present disclosure is not limited to the following examples unless the gist thereof is exceeded.

Measurement methods and evaluation methods for purging compounds in Examples and Comparative Examples are as follows.

<Calculations of branching index, extensional viscosity, shear viscosity, storage elastic modulus, and component ratio of thermoplastic resin having long chain branch>

[Branching index]

In a gel permeation chromatography, a high temperature gel permeation chromatograph model PL-GPC220 (manufactured by Polymer Laboratories Ltd.) equipped with a differential refractometer which was built in the apparatus, a dual-angle light-scattering photometer model PD2040 (manufactured by Precision Detectors Inc.), and a bridge-type viscometer model PL-BV400 (manufactured by Polymer Laboratories Ltd.) was used. The mobile phase solvent used was 1,2,4-trichlorobenzene (to which an antioxidant BHT was added), the flow rate was 1 mL/min, and the columns used were two TSKgel GMHHR-H (S) and one TSKgel GHHR-M (S) columns manufactured by Tosoh Corporation. The temperatures of the columns, the sample injection section, and each detector were set to 140 °C, the sample concentration was set to 1 mg/mL, and the injection volume was set to 0.5 mL. A sintered filter with a pore size of 1 $\mu$m was used for filtration of samples. The absolute molecular weight and the limiting viscosity of each purging compound composition were calculated using polystyrene with a molecular weight of 190,000 manufactured by Tosoh Corporation for calibration of the apparatus.

The branching index was calculated as the ratio ($[\eta]$br / $[\eta]$lin) of the limiting viscosity ($[\eta]$br) obtained by the measurement by the viscometer when the absolute molecular weight determined by the light scattering was 1,000,000, to the limiting viscosity ($[\eta]$lin) obtained by carrying out a measurement on a linear polymer.

Linear polymers used were as follows: a linear low-density polyethylene 1475a manufactured by NIST was used for polyethylene-based resins, PP210K manufactured by American Polymer Standards was used for polypropylene-based resins, and monodisperse polystyrene (molecular weight: 190,000) manufactured by Tosoh Corporation was used for polystyrene-based resins. In cases where a plurality of thermoplastic resins were used, a mixture obtained by mixing corresponding linear polymers at the same component ratio was used.

Because a linear correlation between the logarithm of $[\eta]$lin of a linear polymer and the logarithm of the molecular weight thereof is known as a Mark-Houwink plot, the numerical value of $[\eta]$lin can be determined through an appropriate extrapolation to the low molecular weight side or the high molecular weight side.

In addition, it was determined that a long chain branch was present when the branching index decreased with an increase in the molecular weight.

[Measurements of extensional viscosity and shear viscosity]

The shear stress was measured at 190 °C using a twin capillary rheometer (RH10 manufactured by Malvern Panalytical), using an orifice die with a long dice (L/d = 16, diameter: 1 mm, inflow angle: 90°) and a short dice (L/d = 0.25, diameter: 1 mm, inflow angle: 90°), at a shear rate of 100 s$^{-1}$ in the measurement mode of twin barrel. The extensional viscosity $\lambda$ (kPa s) and the shear viscosity $\eta$ (Pa s) were determined according to the following Cogswell theoretical equation (Polymer Engineering Science, 12, 64 (1972)).

Note that only the Bagley correction was used and the Rabinowitsch correction was not used for correction of data.

Extensional viscosity

$$\lambda \ [kPa \cdot s] = 9(n+1)^2 Po^2 \ / \ (32\eta\gamma^2)$$

Shear viscosity

$$\eta \ [kPa \cdot s] = Tc/\gamma$$

Apparent shear rate

$$\gamma \ [s^{-1}] = 4Q \ / \ ((\pi d^3)/8)$$

Corrected shear stress

$$Tc \ [kPa] = (Pl - Po)d \ / \ 4L$$

(In the equation, Q represents the volumetric flow rate, d represents the capillary diameter of the die (mm), Pl represents the pressure loss on the side of the long dice, Ps represents the pressure loss on side of the short dice, Po represents zero thickness-converted pressure on the side of short dice, or the pressure when L/d = 0 obtained by extrapolation from the value of Pl - Ps, and n represents the power low index (n = 1, 2, 3, 4 ...)).

[Measurement of storage elastic modulus]

The storage elastic modulus (kPa) was measured at an angular velocity of 100 rad/sec using a rheometer (ARES-G2 manufactured by TA Instruments) at 190 °C with a parallel plate (25 mm in diameter) under a nitrogen atmosphere with a gap of 1.0 to 2.0 mm and a strain of 0.3 to 1.0%.

[Calculation of component ratio of thermoplastic resin having long chain branch structure]

For analyzing the composition, a high-throughput composition analyzer (manufactured by Polymer Characterization, S.A.) equipped with an MCT infrared detector IR5 (manufactured by Polymer Characterization, S.A.) incorporated in the apparatus was used for a chromatography by means of crystallization elution fractionation. As the mobile solvent, 1,2-dichlorobenzene (to which an antioxidant BHT was added) was used, and a CEF column (manufactured by Polymer Characterization, S.A., length: 150 mm, volume: 2.3 mL, detection wavelengths: 3.42 $\mu$m (2920 cm$^{-1}$) for methylene sensor $CH_2$, 3.38 $\mu$m (2960 cm$^{-1}$) for methyl sensor $CH_3$ was used as the column. The sample concentration was 16 mg/8 mL, the dissolution conditions were 150 °C, 60 min, and $N_2$ atmosphere, and a 1.0-$\mu$m in-line filter was used for filtration of samples. The injection amount was 0.2 mL, the temperature drop conditions were from 95 °C to -20 °C at 1.0 °C/min at a flow rate of 0.012 mL/min, and the temperature rise conditions were from -20 °C to 160 °C at 4.0 °C/min at a flow rate of 1.0 mL/min. The component ratio of a thermoplastic resin having a long chain branch structure in a purging compound composition was determined from the peak area(s) of the elution curve (mass%).

<Evaluation of cleaning ability>

A low-density polyethylene colored in blue (SUNTEC M1920 manufactured by Asahi Kasei Corporation) was used as a colored master batch, 10 parts by mass of the colored master batch and 90 parts by mass of a high-density polyethylene (SUNTEC B871 manufactured by Asahi Kasei Corporation) were mixed, and 3 kg of the mixture was charged into a blow molding machine (JEB-7 manufactured by The Japan Steel Works, Ltd.). The screws were rotated to discharge the resin mixture from the die, so that a simulated stain was adhered to the inside of the molding machine.
Thereafter, 4 kg of each of the purging compound compositions obtained in Examples and Comparative Examples was charged into the molding machine, and cleaning was carried out by screw rotations under the conditions of a cylinder temperature of 190 °C and a die temperature of 190 °C. The purge waste was discharged until the cleaning was completed under visual observation of the color tone of the purge waste discharged from the die. The amount (kg) of the discharged purge waste was measured with a balance. It was determined that a smaller amount of the discharged purge waste indicated a better cleaning performance, and the evaluation was made according to the following evaluation criteria.
It should be noted that the purge waste discharged from the die during cleaning was cooled to room temperature to be solidified. A determination that cleaning was completed was made at the point in time when the color tone of the solidified product changed from blue to the color of the purging compound composition.

[Evaluation criteria]

A: The amount of the purge waste was 2.6 kg or less, indicating that the cleaning property was particularly good
B: The amount of the purge waste was more than 2.6 kg and 2.8 kg or less, indicating that the cleaning property was better
C: The amount of the purge waste was more than 2.8 kg and 3.0 kg or less, indicating that the cleaning property was good
D: The amount of the purge waste was more than 3.0 kg, indicating that cleaning was difficult.

<Evaluation of displacement property>

After the above <Evaluation of cleaning performance> test, 4 kg of a high-density polyethylene (SUNTEC B871 manufactured by Asahi Kasei Corporation) was charged into the above-described blow molding machine, and displacement by screw rotations was carried out under the condition of a cylinder temperature of 190 °C and a die temperature of 190 °C. The purge waste was discharged until the displacement was completed under visual observation of the color tone of the appearance of the molten resin discharged from the die. The amount of the discharged purge waste (kg) was measured with a balance. It was determined that a smaller amount of the discharged purge waste indicated a higher displacement property, and the evaluation was performed according to the following evaluation criteria.
It should be noted that a determination that displacement was completed was made at the point in time when the color tone of the appearance of the molten purge waste discharged from the die during displacement changed from the color of the purging compound composition to transparent.

[Evaluation criteria]

A: The amount of the purge waste was less than 1.5 kg, indicating that displacement property was good
D: The amount of the purge waste was 1.5 kg or more, indicating that displacement of the purging compound was difficult

The raw materials used in Examples and Comparative Examples are as follows.

[Thermoplastic resin]

HD1: High-density polyethylene (SUNTEC B770 manufactured by Asahi Kasei Corporation) without long chain branches
HD2: High-density polyethylene (Novatec HB420R manufactured by Japan Polypropylene Corporation) having long chain branches
HD3: High-density polyethylene (Nipolon Hard 6900B manufactured by Tosoh Corporation) without long chain branches
HD4: High-density polyethylene (HI-ZEX 5000SR manufactured by Mitsui Chemicals, Inc.) without long chain branches
HD5: High-density polyethylene (HI-ZEX 6200B manufactured by Mitsui Chemicals, Inc.) without long chain branches
LD1: Low-density polyethylene (SUNTEC M2102 manufactured by Asahi Kasei Corporation) having long chain branches
LD2: Low-density polyethylene (Petrosen 219 manufactured by Tosoh Corporation) having long chain branches
LL1: Linear low-density polyethylene (Novatec UF320 manufactured by Japan Polypropylene Corporation) without long chain branches
LL2: Linear low-density polyethylene (Evolue SP3010 manufactured by Mitsui Chemicals, Inc. without long chain branches
LL3: Linear low-density polyethylenes (GS650 manufactured by NUC) without long chain branches
EEA: Ethylene-ethyl acrylate copolymer (EVAFLEX AN4214C manufactured by DuPont Mitsui Chemicals, Inc.) without long chain branches
PP1: polypropylene homopolymer (VS200A manufactured by SunAllomer Ltd.) without long chain branches

MAH-PS: Styrene-maleic acid copolymer (New Frontier MI-400P manufactured by DKS Co. Ltd.) without long chain branches
MMSC: Methyl methacrylate-styrene copolymer (New Frontier MS-750P, manufactured by DKS Co. Ltd. without long chain branches

[Additives]

Inorganic foaming agent 1: Sodium bicarbonate
Calcium carbonate: Calcium carbonate (TW-300s manufactured by OKUTAMA KOGYO CO., LTD.)
GF: Glass fibers (ECS-03-T-120 manufactured by NEG Co., Ltd.)
Talc: Talc (PHSH Talc manufactured by Takehara Kagaku Kogyo Co., Ltd.)
$AL(OH)_3$: (Higilite H-32 manufactured by Showa Light Metal Co., Ltd.)
PEO: Polyethylene oxide (ALKOX R-1000 manufactured by Meisei Chemical Works, Ltd.)
AB1: Lubricant (ALFLOW H-50F manufactured by NOF CORPORATION)
AB2: Lubricant (magnesium stearate SM-PG manufactured by SAKAI CHEMICAL INDUSTRY CO., LTD.)
AB3: Lubricant (calcium salt of boric acid ester of monoglyceride of stearic acid)
AB4: Lubricant (basic magnesium carbonate manufactured by SAKAI CHEMICAL INDUSTRY CO., LTD.)
SU1: Surfactant (071D manufactured by Riken Vitamin Co., Ltd.)
SU2: Surfactant (polyoxyethylene distearate manufactured by Kao Corporation)
SU3: Surfactant (CHEMISTAT 3033 manufactured by Sanyo Chemical Industries, Ltd.)
SU4: Surfactants (Hostapur SAS93 manufactured by Clariant Japan K. K.)
SU5: Surfactant (sodium dodecylbenzenesulfonate manufactured by JUNSEI CHEMICAL CO., LTD.)

[Example 1]

A composition containing LD1 as a thermoplastic resin, AB1 as a lubricant, and SU1 as a surfactant in the proportions summarized in Table 1 were premixed using a tumbler blender for 5 minutes in advance, and the resulting mixture was kneaded by a twin-screw extruder. The kneading was performed using a twin-screw extruder (TEM26SS manufactured by Toshiba Machine Co., Ltd.) under the conditions of an extrusion temperature of 240 °C and an extrusion rate of 20 kg/hour.
The melt-kneaded product thus obtained was extruded into strands, water-cooled, and then cut by a strand cutter to obtain a pelletized purging compound composition.
Evaluation results of the obtained purging compound composition are summarized in Table 1.

[Examples 2 to 12]

A pelletized purging compound composition was obtained in the same manner as in Example 1 except that the compositions were changed as summarized in Table 1.
Evaluation results of the obtained purging compound compositions are summarized in Table 1.

[Comparative Examples 1 to 9]

A pelletized purging compound composition was obtained in the same manner as in Example 1 except that the compositions were changed as summarized in Table 2.
Evaluation results of the obtained purging compound compositions are summarized in Table 2.

[Table 1]

| Composition | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| | Thermo plastic resin | HD1 | mass% | | 93.0 | 88.0 | 83.0 | 53.0 | 48.0 | 38.0 | 28.0 | | 78.4 | 58.8 | |
| | | HD2 | mass% | | | | | | | | | 98.0 | 19.6 | 19.6 | 58.8 |
| | | LD1 | mass% | 98.0 | 5.0 | 10.0 | 15.0 | 45.0 | | 60.0 | 70.0 | | | 19.6 | 19.6 |
| | | LD2 | mass% | | | | | | 50.0 | | | | | | |
| | | LL1 | mass% | | | | | | | | | | | | 19.6 |
| | Additive | AB1 | mass% | 0.50 | 0.50 | 0.50 | 0.50 | 0.50 | 0.50 | 0.50 | 0.50 | 0.50 | 0.50 | 0.50 | 0.50 |
| | | SU1 | mass% | 1.50 | 1.50 | 1.50 | 1.50 | 1.50 | 1.50 | 1.50 | 1.50 | 1.50 | 1.50 | 1.50 | 1.50 |

(continued)

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Physical properties | Branching index at absolute molecular weight of 1,000,000 | - | 0.80 | 0.99 | 0.90 | 0.86 | 0.85 | 0.85 | 0.84 | 0.84 | 0.99 | 0.96 | 0.85 | 0.86 |
| | Component ratio of thermoplastic resin having long chain branch structure | mass% | 98.0 | 5.0 | 10.0 | 15.0 | 45.0 | 50.0 | 60.0 | 70.0 | 98.0 | 19.6 | 39.2 | 78.4 |
| | Extensional viscosity at 190 °C and 100 sec$^{-1}$ | kPa.s | 46 | 45 | 51 | 56 | 50 | 50 | 49 | 48 | 45 | 45 | 56 | 55 |
| | Shear viscosity at 190 °C and 100 sec$^{-1}$ | Pa·s | 1004 | 1350 | 1320 | 1287 | 1130 | 1128 | 1124 | 1111 | 1213 | 1312 | 1221 | 1043 |
| | Extensional viscosity/Shear viscosity at 190 °C and 100 sec$^{-1}$ | - | 46 | 33 | 39 | 44 | 44 | 44 | 44 | 43 | 37 | 34 | 46 | 53 |
| | Storage elastic modulus at 190 °C and 100 rad/sec | kPa | 80 | 132 | 127 | 120 | 88 | 89 | 84 | 82 | 92 | 114 | 98 | 86 |
| | Cleaning ability | kg | 3.0 | 2.8 | 2.5 | 2.4 | 2.7 | 2.8 | 2.9 | 3.0 | 2.8 | 2.7 | 2.6 | 2.7 |
| | | - | C | B | A | A | B | B | C | C | B | B | A | B |
| | Displacement property | kg | 1.1 | 1.1 | 1.1 | 1.1 | 1.1 | 1.1 | 1.1 | 1.1 | 1.3 | 1.2 | 1.1 | 1.1 |
| | | - | A | A | A | A | A | A | A | A | A | A | A | A |

[Table 2]

| | | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|---|
| Thermo plastic resin | HD1 | mass% | | | | | 50 | | | | 97 |
| | liD3 | mass% | 96 | | | | | | | | |
| | HD4 | mass% | | | | | | | 60 | | |
| | HD5 | mass% | | | | | | | | 65 | |
| | PP1 | mass% | | | 97 | 78 | | | | | |
| | LD1 | mass% | | | | | | | | | 2.4 |
| | LL2 | mass% | | 71 | | | | | | | |
| | LL3 | mass% | | | | | | 90 | | | |
| | EEA | mass% | | 22 | | | | | | | |
| | MAH-PS | mass% | | | 3 | | | | | | |
| | MMSC | mass% | | | | 10 | | | | | |

| Composition | Additive | inorganic foaming agent 1 | mass% | | | | | | | | | 0.6 |
|---|---|---|---|---|---|---|---|---|---|---|---|---|
| | | | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
| | | calc | mass% | 1 | | | | | | | | |
| | | calcium carbonate | mass% | | | | | 48 | | | 10 | |
| | | GF | mass% | | | | | | | 38 | | |
| | | Al(OH)$_3$ | mass% | | | | | | | | 15 | |
| | | AB1 | mass% | | | | | 2 | | | | |
| | | AB2 | mass% | | 2 | | | | 5 | | | |
| | | AB3 | mass% | | | | 12 | | | | | |
| | | AB4 | mass% | | | | | | 5 | | | |
| | | PEO | mass% | | 2 | | | | | | | |
| | | SU2 | mass% | 3 | | | | | | | | |
| | | SU3 | mass% | | 3 | | | | | | | |
| | | SU4 | mass% | | | | | | | 2 | | |
| | | SU5 | mass% | | | | | | | | 10 | |
| | Branching index at absolute molecular weight of 1,000,000 | | - | 1.00 | 1.00 | 1.00 | 1.00 | 1.00 | 1.00 | 1.00 | 1.00 | 1.00 |
| | Component ratio of thermoplastic resin having long chain branch structure | | mass% | 0 | 0 | 0 | 0 | 0 | 0 | 0 | 0 | 2.4 |
| | Extensional viscosity at 190°C and 100 sec$^{-1}$ | | kPa·s | 39 | 40 | 40 | 40 | 39 | 40 | 39 | 39 | 40 |

EP 4 147 840 A1

19

(continued)

| | | | Comp. Example 1 | Comp. Example 2 | Comp. Example 3 | Comp. Example 4 | Comp. Example 5 | Comp. Example 6 | Comp. Example 7 | Comp. Example 8 | Comp. Example 9 |
|---|---|---|---|---|---|---|---|---|---|---|---|
| Physical properties | Shear viscosity at 190 °C and 100 sec $^{-1}$ | Pa.s | 1390 | 1260 | 1260 | 1326 | 1390 | 1230 | 1428 | 1339 | 1513 |
| | Extensional viscosity/ Shear viscosity at 190 °C and 100 sec $^{-1}$ | - | 28 | 32 | 32 | 30 | 28 | 33 | 27 | 29 | 26 |
| | Storage elastic modulus at 190 °C and 100 rad/sec | kPa | 150 | 74 | 147 | 157 | 161 | 89 | 158 | 140 | 114 |
| | Cleaning ability | kg | 3.1 | 3.1 | 3.3 | 2.9 | 2.8 | 3.8 | 2.7 | 2.8 | 3.1 |
| | | - | D | D | D | C | B | D | B | B | D |
| | Displacement property | kg | 1.3 | 1.1 | 1.1 | 2.9 | 3.5 | 1.1 | 3.2 | 3.0 | 2.8 |
| | | - | A | A | A | D | D | A | D | D | D |

It can be understood from the above results that the purging compound compositions obtained in Examples 1 to 12 had a good cleaning ability and easy displacement property.

In contrast, it was discovered from the above results that the purging compound compositions obtained in Comparative Examples 1 to 9 were unsuitable for cleaning because of their low branch indices and insufficient cleaning powers.

INDUSTRIAL APPLICABILITY

The purging compound composition for resin molding processing machines of the present disclosure exhibits an excellent cleaning performance as well as having excellent easy displacement property, and is useful as a purging compound composition for cleaning of thermoplastic resins, particularly as purging compound composition for injection molding and extrusion molding processing machines.

REFERENCE SIGNS LIST

1   Piston
2   Barrel
3   Pressure gauge
4   Long dice
5   Short dice

**Claims**

1. A purging compound for molding machines, comprising a thermoplastic resin having a long chain branch structure, wherein a branching index at an absolute molecular weight of 1,000,000 is more than 0.30 and less than 1.00.

2. The purging compound for molding machines according to claim 1, wherein a ratio (extensional viscosity/shear viscosity) of an extensional viscosity at 190 °C at a shear rate of 100 sec$^{-1}$ to a shear viscosity at 190 °C at a shear rate of 100 sec$^{-1}$ is 30 or more.

3. The purging compound for molding machines according to claim 1 or 2, wherein the extensional viscosity at 190 °C at a shear rate of 100 sec$^{-1}$ is 42 to 150 kPa·s, and a shear viscosity at 190 °C at a shear rate of 100 sec$^{-1}$ is 500 to 1400 Pa·s.

4. The purging compound for molding machines according to any one of claims 1 to 3, wherein the thermoplastic resin having a long chain branch structure is contained in an amount of 5 mass% or more and 70 mass% or less.

5. The purging compound for molding machines according to any one of claims 1 to 4, wherein a storage elastic modulus of 190 °C at an angular velocity of 100 rad/sec is 80 kPa or more.

6. The purging compound for molding machines according to any one of claims 1 to 5, wherein a content of an additive having a scrubbing effect is 9 mass% or less.

7. The purging compound for molding machines according to any one of claims 1 to 6, comprising a thermoplastic resin having a melting point of 130 °C or higher.

# FIG. 1

## INTERNATIONAL SEARCH REPORT

| International application No. |
|---|
| PCT/JP2021/017561 |

**A. CLASSIFICATION OF SUBJECT MATTER**
B29B 9/12(2006.01)i; C11D 3/37(2006.01)i
FI: C11D3/37; B29B9/12

According to International Patent Classification (IPC) or to both national classification and IPC

**B. FIELDS SEARCHED**

Minimum documentation searched (classification system followed by classification symbols)
B29B9/12; C11D3/37

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 8-59905 A (CHISSO CORPORATION) 05 March 1996 (1996-03-05) claim 1, paragraph [0009], example 1, table 1 | 1-7 |
| A | JP 2001-150456 A (ASAHI KASEI CORPORATION) 05 June 2001 (2001-06-05) claims, examples | 1-7 |
| A | JP 2002-210748 A (WEST JAPAN PLASTIC PRODUCTS INDUSTRIAL ASSOCIATION) 30 July 2002 (2002-07-30) claims, examples | 1-7 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 July 2021 (21.07.2021) | 03 August 2021 (03.08.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT
Information on patent family members

International application No.

PCT/JP2021/017561

| Patent Documents referred in the Report | Publication Date | Patent Family | Publication Date |
|---|---|---|---|
| JP 8-59905 A | 05 Mar. 1996 | (Family: none) | |
| JP 2001-150456 A | 05 Jun. 2001 | US 6551411 B1 claims, examples | |
| JP 2002-210748 A | 30 Jul. 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018159752 A1
- JP 2007021765 A
- JP H10120917 A
- JP H11106667 A
- JP 2009134141 A
- WO 2015080103 A
- JP 2006335913 A
- JP 2014530271 A
- JP H05124046 A
- JP H10081898 A

**Non-patent literature cited in the description**

- Developments in Polymer Characterization. Applied Science Publishers, 1983, vol. 4
- *Polymer Engineering Science,* 1972, vol. 12, 64